# EUROPEAN PATENT SPECIFICATION

(11) **EP 3 276 266 B1**
(45) Date of publication and mention of the grant of the patent: **25.08.2021**
(21) Application number: 16181241.7
(22) Date of filing: 26.07.2016
(51) Int. Cl.: F24D 19/10, F24F 11/00, G05D 23/19, F24D 3/02, F24F 11/30

(54) **METHOD FOR CONTROLLING A HEATING OR COOLING SYSTEM AND HEATING OR COOLING SYSTEM**
VERFAHREN ZUR STEUERUNG EINES HEIZ- ODER KÜHLSYSTEMS UND HEIZ- ODER KÜHLSYSTEM
PROCÉDÉ POUR COMMANDER UN SYSTÈME DE CHAUFFAGE OU DE REFROIDISSEMENT ET SYSTÈME DE CHAUFFAGE OU DE REFROIDISSEMENT

(43) Date of publication of application: 31.01.2018
(73) Proprietor: Danfoss A/S, 6430 Nordborg (DK)
(72) Inventor: NIELSEN, Peter Gammeljord, 7100 Vejle (DK); HESSELDAHL, Søren, 7182 Bredsten (DK); BALZARINI, Gaia, 23900 Lecco (IT); CLAUSEN, Anders Østergaard, 8680 Ry (DK)

(56) References cited:
- DE-A1-102012 112 710
- US-A1- 2014 277 764
- US-A1- 2015 233 597

## Description

The invention relates to a method for controlling a heating or cooling system comprising a heat exchanger, a valve arranged to control the flow of a heating or cooling fluid through the heat exchanger, at least one temperature sensor arranged to measure a temperature response to a change in the opening degree of the valve, a control unit arranged to control the opening degree of the valve as well as to receive temperature measurements from the at least one temperature sensor. The invention furthermore relates to a heating or cooling system used in the above method.

From DK 2012 00174 A1 a method as well as a system of the above kind is known. An actuator attached to the valve is controlled by temperature sensors arranged at the outlet of the heat exchanger as well as in the room. In a first control loop the valve is controlled by a thermostat using the outlet temperature sensor. The inlet valve is controlled such that the fluid at the outlet is cooled below a certain temperature threshold. In a second control loop the room temperature sensor measurements are used to control the inlet valve.

This method has the disadvantage that a good presetting is usually necessary to ensure the control is more less accurate. Otherwise the system will repeatedly heat or cool too much or too little and then react to the incorrect control with a time delay. This problem is more prominent if the heat exchanger does not have an appropriate power for the room, other system components like the valve are not optimally matched or the presetting is not or not properly done after installation of the system. Consequently, this leads to increased costs and a reduced comfort of the user.

From EP 2 420 748 A2 a further method for controlling a heating system is known. Temperatures of at least two heat exchangers are measured and compared to stored model data and depending on the result the maximum opening degree of the valve is limited electronically.

However the latter solution requires sufficiently accurate model data for the heating system to avoid erratic control behavior of the system, resulting e. g. in unwanted underheating of certain rooms.

Document DE 10 2012 112 710 A1 describes a method for controlling a valve in a heating or cooling system, wherein a controller determines a new operating point of the valve in relation to a sensed temperature of the heat transfer fluid under control.

The task of the present invention is therefore to provide a more accurate method of controlling a cooling or heating system.

According to the present invention the above task is solved by a method for controlling a cooling or heating system of the kind mentioned at the outset, wherein the method comprises the steps:
a) The control unit stores at least one working point comprising an opening degree of the valve and a corresponding expected temperature,
b) the control unit provides a chosen working point to the valve,
c) after a working point has been used for a predetermined time period the at least one temperature sensor provides a temperature measurement to the control unit,
d) if the measured temperature does not match the expected temperature derived from the working point, the control unit adapts the currently used working point by changing the stored opening degree.

This solution allows the system to adapt to the actual heating or cooling need of the room. If the control unit detects that the working point does not achieve the intended heating or cooling, the working point is changed and saved accordingly. This way, the desired heating or cooling for the given working point can be achieved to a higher accuracy. Moreover, the system can react to external changes (e. g. in the room) like a change in the usage of the room, in the effectiveness of the heat exchanger or in the daily ventilation of the room. A working point here and in the following denotes a data set used for controlling the opening degree of the valve. The data set will at least comprise an opening degree of the valve and one or more expected temperatures. The value of the valve opening degree stored in the data set of the working point is used to control the valve if said working point is chosen in the control unit. The system can comprise at least one temperature sensor arranged at an outlet of the heat exchanger to measure the temperature of the fluid exiting the heat exchanger. Additionally or alternatively the system can comprise at least one temperature sensor arranged in the same room as the heat exchanger to measure the temperature of the room. The system may comprise an additional temperature sensor arranged at the valve or at the inlet of the heat exchanger to measure the temperature of the fluid entering the heat exchanger. A measurement of the room temperature can allow to calculate if the valve opening degree of the current working point is sufficient to heat up or cool down the room in an adequate time. Furthermore, it is possible to calculate temperature gradients if at least two temperature measurements of the room temperature sensor are made and compared. A temperature gradient allows to estimate how quickly the room can be heated up or cooled down using a certain working point and corresponding valve opening degree. In case a temperature gradient is used in the working point, the "expected temperature derived from the working point" in step d) may be calculated from a temperature gradient stored in the working point combined with a temperature measurement provided by one of the temperature sensors, e. g. at the time the working point is activated. The "expected temperature derived from the working point" may thus mean a temperature stored in the working point or a temperature calculated from a stored temperature gradient and a temperature measurement. Both possibilities may be used at the same time, e. g. if both a room temperature sensor as well as an outlet temperature sensor are used. Temperature measurements from an outlet temperature sensor on the other hand allow to detect when the outlet fluid temperature has stabilized after a change in working point. The time necessary for the outlet temperature to stabilize is a measure of whether or not the opening degree of the current working point is to large or too small to achieve the expected temperature in the expected time. With this control method the system will be able to self-adjust to the components, the time, the season as well as to the location the system is installed at. This improves the accuracy of the control, reduces over- or underheating and consequently reduces the costs and increases the comfort of the user.

It is preferred, if the control unit stores at least two working points, wherein after each change to certain working points the new working point is adjusted according to steps b) to d). It is also possible that after each change to any different working point the new working point is adjusted according to steps b) to d). However for some working points it may not be necessary to perform regular adjustments. For example a nighttime working point may have a so low opening degree and corresponding expected temperature that the room will not cool down to this temperature overnight in any case. Consequently, for the change to certain working points the adjustment procedure according to steps b) to d) may be disabled. This feature is however not according to the invention.

In a preferred embodiment the control unit estimates in step d) the necessary opening degree from the difference of the expected temperature derived from the working point to the measured temperature provided by the at least one temperature sensor, wherein the opening degree stored in the working point is adapted by adding a fraction of the difference between the estimated necessary opening degree of the valve and the stored opening degree of the valve in the working point. For example, if an outlet temperature sensor is used and from the temperature measurements provided the control unit estimates, that instead of the current opening degree of 50 % in the working point an opening degree of 66 % would have resulted in a sufficiently quick approach of a constant outlet temperature, the control unit will not simply adjust the working point to 66 % valve opening degree. Instead, the stored opening degree in the working point may only be adjusted by a fraction F_{D} of the difference (here a fraction of 16 %), e. g. by 2 % to a new valve opening degree of 52 % stored in the working point. Such a slow adjustment prevents unnecessary fluctuations and misadjustments due to singular events (e. g. a window left open).

It is furthermore preferred if the fraction F_{D} of the difference added to the opening degree of the working point lies between 5 % and 25 %. Such a low fraction F_{D} will ensure that the adjustment of the working points will only happen because of long term changes like a change in season or a long term change in the usage or ventilation of the room. Fluctuations like a single much warmer day, a window left open for too long or a single day with a much higher occupation of the room than usual will then only lead to a small adjustment of the working point and the heating or cooling control for the next day will not be completely inaccurate. Even more preferably the fraction F_{D} of the difference added lies between 10 % and 15 %.

It is preferred if the control unit comprises a programmable time switch to change between working points at predetermined times. For example the control unit can change from a nighttime working point to a daytime working point and vice versa at fixed times during the day. Moreover, the control unit can also be provided with different working point for each season and/or separate working points for vacation times when the room is not occupied for a longer duration of time. This can prevent the misadjustment of a certain working point which may take several days or weeks to return to the accurate control position of the working point for example after a person using the room went on vacation and then returned.

It is preferred if the control unit activates an overshoot-mode before a programmed change between certain working points, wherein the valve is opened by a fixed factor F_{O} multiplied by the opening degree of the following working point for an overshoot duration D_{O}. The Factor F_{O} may for example lie between 1.1 and 2. This embodiment is particularly advantageous if the following working point has a stored opening degree of the valve that is larger than the stored opening degree of the previous working point. The overshoot duration D_{O} allows to shorten the period of time necessary to heat up or cool down the room from a lower level of heating or cooling to a higher level of heating or cooling. The overshoot-mode is activated by the time switch before the change from one working point to another working point, i. e. if a switch from a nighttime working point to a daytime working point is programmed for 8 a.m., then the overshoot mode may for example be activated from 7.30 a.m. to 8 a.m. to heat up the room close to the desired temperature for the daytime working point.

It is furthermore preferred if the control unit receives a temperature measurement from the at least one temperature sensor at the end of the overshoot duration D_{O} and compares the measurement to the temperature derived from the following working point, wherein the overshoot duration D_{O} is changed if the measured temperature is higher or lower than expected. Consequently, the start of the overshoot-mode will be moved to an earlier or a later point in time as controlled by the time switch but the end of the overshoot mode will be kept at the same point in time at which the new working point is to be used. Consequently, the system can ensure that a certain temperature that is desired by the user can be reached at the desired time by starting the overshoot mode early enough.

It is furthermore preferred if the control unit estimates the necessary overshoot duration D_{E} to reach the expected temperature derived from the following working point and adapts the current overshoot duration D_{O} by adding a fraction F_{O} of the difference between the estimated necessary overshoot duration D_{E} to the current overshoot duration D_{O}. This way it is ensured that the overshoot duration will only be adapted slowly and controlled. Single day events like a left open window or an occupation stated of the room that is different from the usual occupation will not result in a drastic change of the overshoot duration D_{O} which may otherwise lead to an incorrect control on the next day.

Preferably the system comprises at least one temperature sensor arranged in the same room as the heat exchanger, wherein the control unit calculates a temperature gradient from temperature measurements by the room temperature sensor during each activation of the overshoot-mode. This calculated temperature gradient can then be directly compared to a temperature gradient stored in the working point. Alternatively the calculated temperature gradient can also be compared to a temperature gradient that is deduced from an expected temperature stored in the working point and at least one temperature measurement.

Preferably the necessary overshoot duration is estimated from an average temperature gradient calculated form at least two temperature measurements provided by the room temperature sensor 9 during each activation of the overshoot-mode.

The above task is also solved by a heating or cooling system comprising a heat exchanger, a valve arranged to control the flow of a heating or cooling fluid through the heat exchanger, at least one temperature sensor arranged to measure a temperature response to a change in the opening degree of the valve, a control unit arranged to control the opening degree of the valve as well as to receive temperature measurements from the at least one temperature sensor, wherein the system is structured and arranged to perform the method according to any of the preceeding embodiments.

The corresponding system thus comprises a control unit that stores at least one working point comprising an opening degree of the valve and a corresponding expected temperature. The control unit can also store a plurality of different working points. The control unit may comprise a time switch to control the change between different working points at predetermined times. The control unit needs to be structured and arranged to provide a working point to the valve and to receive temperature measurements from the at least one temperature sensor. The control unit furthermore needs to be structured and arranged to be able to adjust the stored working points by changing the stored opening degree based on the received temperature measurements.

It is preferred if the system comprises an electronic actuator arranged to actuate the valve. The electronic actuator can for example be a stepper motor connected to the valve.

It is preferred if the valve comprises a pressure regulating valve to keep the pressure drop over the valve constant. This ensures that the flow through the valve can be precisely controlled depending on the opening degree of the valve. In particular, one may then achieve a quite precise control of the heating or cooling even without an outlet temperature sensor. The control can then be based on calculating temperature gradients from the received temperature measurement of the room temperature sensor. The calculated temperature gradient can then be compared to the temperature gradient expected from the working point or from a comparison of the working point to the first temperature measurement provided by the room temperature sensor.

Preferably the system comprises at least one temperature sensor arranged at an outlet of the heat exchanger to measure the temperature of the fluid exiting the heat exchanger. As explained before, temperature measurements from an outlet temperature sensor allow to detect when the outlet fluid temperature has stabilized after a change in working point. From the time necessary for the outlet temperature to stabilize the control unit can determine if the opening degree of the current working point is too large or too small to achieve the expected temperature in the expected time.

Preferred embodiments of the invention will now be described with reference to the figures, wherein:
- Fig. 1: shows a first embodiment of a system according to the invention,
- Fig. 2: shows a second embodiment of a system according to the invention,
- Fig. 3: shows a third embodiment of a system according to the invention, and
- Fig. 4: shows a flow diagram of the control method according to the invention.

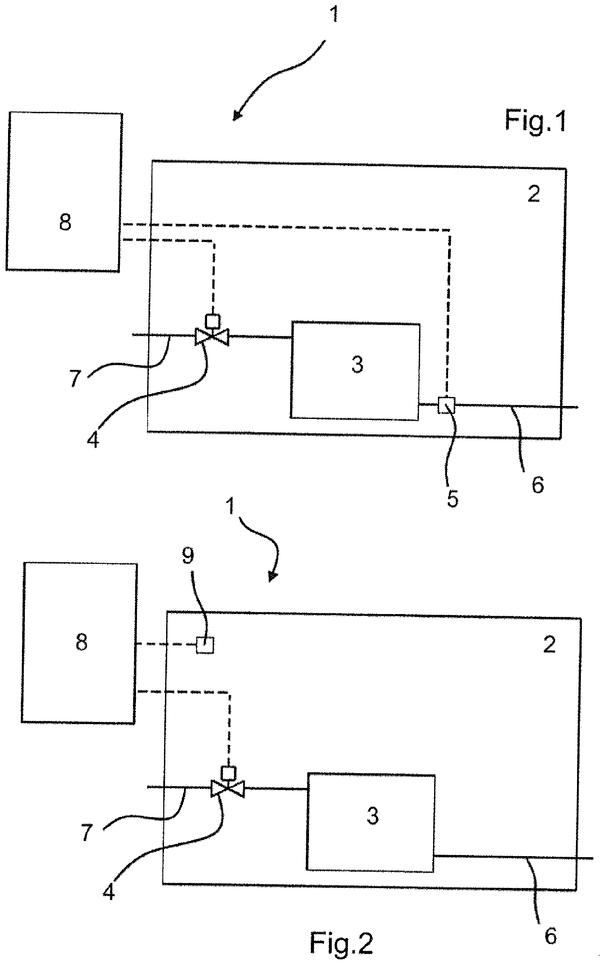

Fig. 1 to 3 shows three different embodiments of a system 1 according to the invention.

The first embodiment of the system 1 according to figure 1 shows a room 2 in which a heat exchanger 3 is arranged. The system 1 furthermore comprises a valve 4 arranged to control the flow of a heating or cooling fluid through the heat exchanger 3. A temperature sensor 5 is arranged at an outlet 6 of the heat exchanger 3. The valve 4 is arranged at an inlet 7 of the heat exchanger 3. A control unit 8 is arranged to control the opening degree of the valve 4 as well as to receive temperature measurements from the temperature sensor 5 arranged at the outlet 6.

Fig. 2 shows a second embodiment of a system 1 according to the invention. The only difference to the first embodiment is that instead of a temperature sensor arranged at the outlet 6, a temperature sensor 9 is arranged in the room 2. The temperature sensor 9 will usually be arranged remote from the heat exchanger 3 such that a representative room temperature may be measured. In this embodiment a pressure regulating valve is preferably part of the valve 4 to ensure a constant pressure difference over the valve 4.

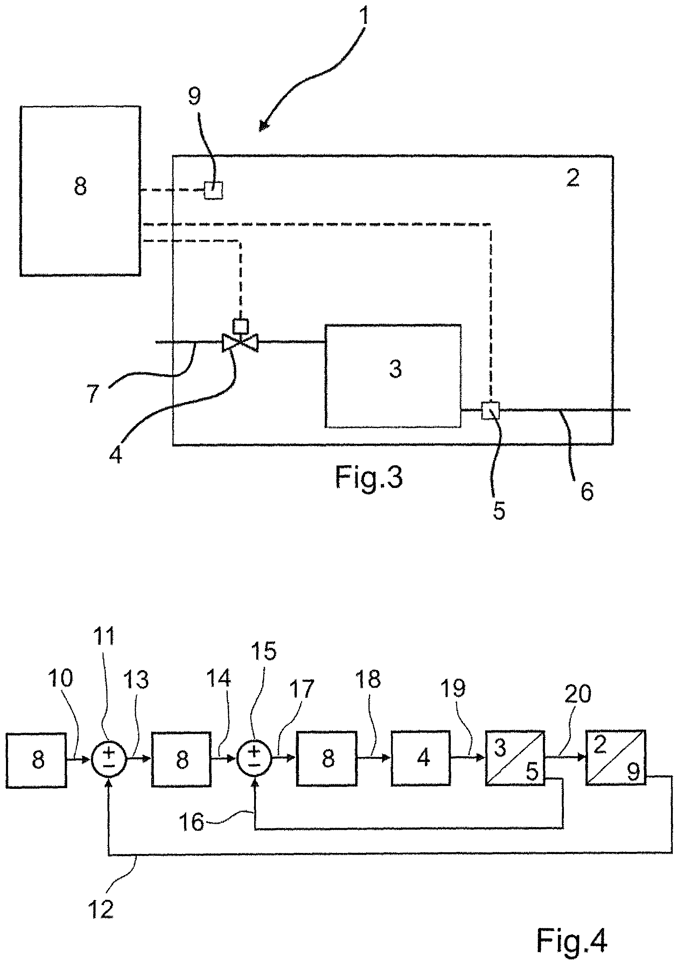

Fig. 3 shows a third embodiment according to the invention. In the third embodiment both a temperature sensor 5 arranged at the outlet 6 of the heat exchanger 3 as well as a temperature sensor 9 arranged in the room 2 is part of the system 1. While this third embodiment using both an outlet temperature sensor 5 as well as a room temperature sensor 9 provides the control unit 8 with more information allowing a more precise readjustment of the working points used to control the valve it is also more expensive because two temperature sensors are used. In this embodiment each working point preferably comprises an expected temperature for both the outlet temperature as well as for the room temperature. Usually the expected temperatures will be expected at different points in time after changing a working point. For example one may usually expect the outlet temperature to approach a constant value more quickly than the room temperature approaches the expected room temperature.

In all three embodiments the connection of the control unit 8 to the valve 4, and to either one or both of the temperature sensors 5, 9 may be wireless or using a wired connection.

Fig. 4 shows a flow diagram of the method for controlling the cooling or heating system according to the invention. The control method is described in a system 1 according to the third embodiment of the system 1 using both an outlet temperature sensor 5 as well as a room temperature sensor 9. The control unit 8 provides an initial working point in step 10 that is adjusted in step 11 using temperature measurements from the room temperature sensor 9 provided in step 12 to the control unit 8. The adapted opening degree for the working point is calculated and stored in step 13 in the control unit 8. The opening degree may here be adapted based on a temperature gradient calculated from two or more room temperature measurements provided by the room temperature sensor 9. The working point can correspondingly also store an expected temperature gradient.

In step 14 the control unit 8 provides the working point to a further adaption step 15. Here measurements for the outlet temperature provided in step 16 by the outlet temperature sensor 5 are used to adapt the working point. If the outlet temperature does not correspond to the expect temperature from the working point, e. g. because the outlet temperature has not yet or to quickly approached a constant outlet temperature, the working point is adapted accordingly. For example if it is expected that the outlet temperature has reached 50°C at half an hour after changing the working point but the temperature measurements of the outlet temperature sensor 5 show that the outlet temperature is only 40°C then the control unit will change the working point to increase the opening degree of the valve stored in the working point. However, this adaptation of the working point will usually be made gradually, as explained before to prevent unnecessary fluctuation in the control of the system. The adapted value for the opening degree of the valve 4 is then stored in the working point in step 17. The adapted working point is then used to control the opening degree of the valve 4 in step 18 when the working point is chosen the next time. The change opening degree of the valve 4 results in a change in temperature in the heat exchanger 3. In particular, the outlet temperature measured by the outlet temperature sensor 5 will change for some time after a change in working point until the outlet temperature approaches a constant value. Temperature measurements by the outlet temperature sensor 5 are repeatedly provided in step 16 to the control unit 8 to allow a recalculation of the opening degree of the valve stored in the working point in step 15. The change in opening degree of the valve 4 resulting in a change of the heating or cooling provided by the heat exchanger 3 will then result in a temperature change in the room 2 in step 20. This change in the room temperature is measured by the room temperature sensor 9 which provides temperature measurements in step 12 to the control unit 8. The temperature measurements provided in step 12 again will be used in step 11 to recalculate the working point and in particular the opening degree of the valve stored in the working point.

Consequently, the provided control method may use either one or two of the readjustment loops to adjust the working point(s) based on the temperature measurement provided by the at least one temperature sensor 5, 9 to adapted working point(s). This adapted working point can be readjusted time and again, while the system may use a fraction F_{D} of the difference between the calculated necessary opening degree to the currently stored opening degree in the working point when adapting the working point. This allows to avoid changing the working point strongly based on mere fluctuations.

## Claims

1. Method for controlling a heating or cooling system (1) comprising:
- a heat exchanger (3),
- a valve (4) arranged to control the flow of a heating or cooling fluid through the heat exchanger (3),
- at least one temperature sensor (5, 9) arranged to measure a
temperature response to a change in the opening degree of the valve (4),
- a control unit (8) arranged to control the opening degree of the valve (4) as well as to receive temperature measurements from the at least one temperature sensor (5, 9),
wherein the method comprises the steps:
a) the control unit (8) stores at least one working point comprising an opening degree of the valve (4) and a corresponding expected temperature,
b) the control unit (8) provides a chosen working point to the valve (4),
c) after a working point has been used for a predetermined time period the at least one temperature sensor (5, 9) provides a temperature measurement to the control unit (8),
d) if the measured temperature does not match the expected temperature derived from the working point, the control unit (8) adapts the currently used working point by changing the stored opening degree.

2. Method according to claim 1, wherein the control unit (8) stores at least two working points, wherein after each change to certain working points the new working point is adjusted according to steps b) to d).

3. Method according to claim 1 or 2, wherein the control unit (8) estimates in step d) the necessary opening degree from the difference of the expected temperature derived from the working point to the measured temperature provided by the at least one temperature sensor, wherein the opening degree stored in the working point is adapted by adding a fraction (F_{D}) of the difference between the estimated necessary opening degree and the stored opening degree of the working point.

4. Method according to claim 3, wherein the fraction (F_{D}) of the difference added to the opening degree stored in the working point lies between 5 % and 25 %.

5. Method according to any of claims 1 to 4, wherein the control unit (8) comprises a programmable time switch to change between working points at predetermined times.

6. Method according to claim 5, wherein the control unit (8) activates an overshoot-mode before a programmed change between certain working points, wherein the valve is opened by a fixed factor (F_{O}) multiplied by the opening degree of the following working point for an overshoot duration (D_{O}).

7. Method according to claim 6, wherein the control unit (8) receives a temperature measurement from the at least one temperature sensor (5, 9) at the end of the overshoot duration (D_{O}) and compares the measurement to the expected temperature derived from the following working point, wherein the overshoot duration (D_{O}) is adapted if the measured temperature is higher or lower than expected.

8. Method according to claim 7, wherein the control unit (8) estimates the necessary overshoot duration (D_{E}) to reach the expected temperature derived from the following working point and adapts the current overshoot duration (D_{O}) by adding a fraction of the difference between the estimated necessary overshoot duration (D_{E}) to the current overshoot duration (D_{O}).

9. Method according to any of claims 6 to 8, wherein the system (1) comprises at least one temperature sensor (9) arranged in the same room (2) as the heat exchanger (3), wherein the control unit (8) calculates a temperature gradient from temperature measurements by the room temperature sensor (9) during each activation of the overshoot-mode.

10. Method according to claim 9, wherein the necessary overshoot duration (D_{E}) is estimated from an average temperature gradient calculated from at least two temperature measurements provided by the temperature sensor (9) during each activation of the overshoot-mode.

11. Heating or cooling system (1) comprising:
- a heat exchanger (3),
- a valve (4) arranged to control the flow of a heating or cooling fluid through the heat exchanger (3),
- at least one temperature sensor (5, 9) arranged to measure a temperature response to a change in the opening degree of the valve (4),
- a control unit (8) arranged to control the opening degree of the valve (4) as well as to receive temperature measurements from the at least one temperature sensor (5, 9), wherein the system (1) is structured and arranged and the control unit (8) configured to perform the method according to any of the preceeding claims.

12. System according to claim 11, **characterized in that** the system (1) comprises an electronic actuator arranged to actuate the valve (4).

13. System according to claim 11 or 12, wherein the valve (4) comprises a pressure regulating valve to keep the pressure drop over the valve (4) constant.

14. System according to any of claims 11 to 13, wherein an additional temperature sensor is arranged at the inlet of the heat exchanger (3) and/or at the valve (4) to measure the temperature of the heating or cooling fluid entering the heat exchanger (3).

15. System according to any of claims 11 to 14, wherein the system comprises at least one temperature sensor arranged at an outlet of the heat exchanger to measure the temperature of the fluid exiting the heat exchanger.

## Patentansprüche

1. Verfahren zum Steuern eines Heiz- oder Kühlsystems (1), umfassend:
- einen Wärmetauscher (3),
- ein Ventil (4), das angeordnet ist, den Durchfluss eines Heiz- oder Kühlfluids durch den Wärmetauscher (3) zu steuern,
- mindestens einen Temperatursensor (5, 9), der angeordnet ist, eine Temperaturantwort auf eine Änderung bei dem Öffnungsgrad des Ventils (4) zu messen,
- eine Steuereinheit (8), die angeordnet ist, den Öffnungsgrad des Ventils (4) zu steuern sowie Temperaturmessungen von dem mindestens einen Temperatursensor (5, 9) zu empfangen,
wobei das Verfahren die folgenden Schritte umfasst:
a) die Steuereinheit (8) speichert mindestens einen Betriebspunkt, der einen Öffnungsgrad des Ventils (4) und eine entsprechende erwartete Temperatur umfasst,
b) die Steuereinheit (8) stellt einen gewählten Betriebspunkt zu dem Ventil (4) bereit,
c) nachdem ein Betriebspunkt für eine vorbestimmte Zeitdauer verwendet wurde, stellt der mindestens eine Temperatursensor (5, 9) eine Temperaturmessung zu der Steuereinheit (8) bereit,
d) wenn die gemessene Temperatur nicht mit der erwarteten Temperatur, die aus dem Betriebspunkt abgeleitet wird, übereinstimmt, passt die Steuereinheit (8) den aktuell verwendeten Betriebspunkt durch Ändern des gespeicherten Öffnungsgrads an.

2. Verfahren nach Anspruch 1, wobei die Steuereinheit (8) mindestens zwei Betriebspunkte speichert, wobei nach jeder Änderung auf bestimmte Betriebspunkte der neue Betriebspunkt gemäß Schritten b) bis d) angeglichen wird.

3. Verfahren nach Anspruch 1 oder 2, wobei die Steuereinheit (8) in Schritt d) den erforderlichen Öffnungsgrad aus der Differenz der von dem Betriebspunkt abgeleiteten erwarteten Temperatur zu der durch den mindestens einen Temperatursensor bereitgestellten gemessenen Temperatur schätzt, wobei der in dem Betriebspunkt gespeicherte Öffnungsgrad durch Hinzufügen eines Bruchteils (F_{D}) der Differenz zwischen dem geschätzten erforderlichen Öffnungsgrad und dem gespeicherten Öffnungsgrad des Betriebspunkts angepasst wird.

4. Verfahren nach Anspruch 3, wobei der Bruchteil (F_{D}) der Differenz, die zu dem in dem Betriebspunkt gespeicherten Öffnungsgrad hinzugefügt wird, zwischen 5 % und 25 % liegt.

5. Verfahren nach einem der Ansprüche 1 bis 4, wobei die Steuereinheit (8) einen programmierbaren Zeitschalter umfasst, um zwischen Betriebspunkten zu vorbestimmten Zeiten umzuschalten.

6. Verfahren nach Anspruch 5, wobei die Steuereinheit (8) einen Überschwingmodus vor einer programmierten Änderung zwischen bestimmten Betriebspunkten aktiviert, wobei das Ventil um einen festen Faktor (F_{O}), multipliziert mit dem Öffnungsgrad des folgenden Betriebspunkts für eine Überschwingdauer (D_{O}) geöffnet wird.

7. Verfahren nach Anspruch 6, wobei die Steuereinheit (8) eine Temperaturmessung von dem mindestens einen Temperatursensor (5, 9) am Ende der Überschwingdauer (Do) empfängt und die Messung mit der aus dem folgenden Betriebspunkt abgeleiteten erwarteten Temperatur vergleicht, wobei die Überschwingdauer (Do) angepasst wird, wenn die gemessene Temperatur höher oder niedriger als erwartet ist.

8. Verfahren nach Anspruch 7, wobei die Steuereinheit (8) die erforderliche Überschwingdauer (D_{E}) schätzt, um die aus dem folgenden Betriebspunkt abgeleitete erwartete Temperatur zu erreichen, und die aktuelle Überschwingdauer (D_{O}) durch Hinzufügen eines Bruchteils der Differenz zwischen der geschätzten erforderlichen Überschwingdauer (D_{E}) zu der aktuellen Überschwingdauer (D_{O}) anpasst.

9. Verfahren nach einem der Ansprüche 6 bis 8, wobei das System (1) mindestens einen Temperatursensor (9) umfasst, der in demselben Raum (2) wie der Wärmetauscher (3) angeordnet ist, wobei die Steuereinheit (8) einen Temperaturgradienten aus Temperaturmessungen durch den Raumtemperatursensor (9) während jeder Aktivierung des Überschwingmodus berechnet.

10. Verfahren nach Anspruch 9, wobei die erforderliche Überschwingdauer (D_{E}) aus einem durchschnittlichen Temperaturgradienten geschätzt wird, der aus mindestens zwei Temperaturmessungen berechnet wird, die durch den Temperatursensor (9) während jeder Aktivierung des Überschwingmodus bereitgestellt werden.

11. Heiz- oder Kühlsystem (1), umfassend:
- einen Wärmetauscher (3),
- ein Ventil (4), das angeordnet ist, den Durchfluss eines Heiz- oder Kühlfluids durch den Wärmetauscher (3) zu steuern,
- mindestens einen Temperatursensor (5, 9), der angeordnet ist, eine Temperaturantwort auf eine Änderung bei dem Öffnungsgrad des Ventils (4) zu messen,
- eine Steuereinheit (8), die angeordnet ist, den Öffnungsgrad des Ventils (4) zu steuern sowie Temperaturmessungen von dem mindestens einen Temperatursensor (5, 9) zu empfangen, wobei das System (1) ausgestaltet und angeordnet und die Steuereinheit (8) ausgelegt ist, das Verfahren nach einem der vorhergehenden Ansprüche durchzuführen.

12. System nach Anspruch 11, **dadurch gekennzeichnet, dass** das System (1) ein elektronisches Betätigungsglied umfasst, das angeordnet ist, das Ventil (4) zu betätigen.

13. System nach Anspruch 11 oder 12, wobei das Ventil (4) ein Druckregelventil umfasst, um den Druckabfall über das Ventil (4) konstant zu halten.

14. System nach einem der Ansprüche 11 bis 13, wobei ein zusätzlicher Temperatursensor an dem Einlass des Wärmetauschers (3) und/oder an dem Ventil (4) angeordnet ist, um die Temperatur des Heiz- oder Kühlfluids, das in den Wärmetauscher (3) eintritt, zu messen.

15. System nach einem der Ansprüche 11 bis 14, wobei das System mindestens einen Temperatursensor umfasst, der an einem Auslass des Wärmetauschers angeordnet ist, um die Temperatur des Fluids, das aus dem Wärmetauscher austritt, zu messen.

## Revendications

1. Procédé destiné à commander un système de chauffage ou de refroidissement (1) comprenant :
- un échangeur de chaleur (3),
- une vanne (4) agencée pour commander l'écoulement d'un fluide de chauffage ou de refroidissement à travers l'échangeur de chaleur (3),
- au moins un capteur de température (5, 9) agencé pour mesurer une réponse en température à un changement dans le degré d'ouverture de la vanne (4),
- une unité de commande (8) agencée pour commander le degré d'ouverture de la vanne (4) ainsi que pour recevoir des mesures de température depuis l'au moins un capteur de température (5, 9),
le procédé comprenant les étapes suivantes :
a) l'unité de commande (8) stocke au moins un point de fonctionnement comprenant un degré d'ouverture de la vanne (4) et une température prévue correspondante,
b) l'unité de commande (8) fournit un point de fonctionnement choisi à la vanne (4),
c) après qu'un point de fonctionnement a été utilisé pendant un laps de temps prédéterminé, l'au moins un capteur de température (5, 9) fournit une mesure de température à l'unité de commande (8),
d) si la température mesurée ne correspond pas à la température prévue dérivée du point de fonctionnement, l'unité de commande (8) adapte le point de fonctionnement en cours d'utilisation en changeant le degré d'ouverture stocké.

2. Procédé selon la revendication 1, dans lequel l'unité de commande (8) stocke au moins deux points de fonctionnement, dans lequel, après chaque changement vers certains points de fonctionnement, le nouveau point de fonctionnement est réglé selon les étapes b) à d).

3. Procédé selon la revendication 1 ou 2, dans lequel l'unité de commande (8) estime à l'étape d) le degré d'ouverture nécessaire à partir de la différence entre la température prévue dérivée du point de fonctionnement et la température mesurée fournie par l'au moins un capteur de température, dans lequel le degré d'ouverture stocké dans le point de fonctionnement est adapté en ajoutant une fraction (F_{D}) de la différence entre le degré d'ouverture nécessaire estimé et le degré d'ouverture stocké du point de fonctionnement.

4. Procédé selon la revendication 3, dans lequel la fraction (F_{D}) de la différence ajoutée au degré d'ouverture stocké dans le point de fonctionnement se situe entre 5 % et 25 %.

5. Procédé selon l'une quelconque des revendications 1 à 4, dans lequel l'unité de commande (8) comprend un commutateur à minuterie programmable pour basculer entre des points de fonctionnement à des moments prédéterminés.

6. Procédé selon la revendication 5, dans lequel l'unité de commande (8) active un mode dépassement avant un basculement programmé entre certains points de fonctionnement, dans lequel la vanne est ouverte par un facteur fixe (Fo) multiplié par le degré d'ouverture du point de fonctionnement suivant pendant une durée de dépassement (Do).

7. Procédé selon la revendication 6, dans lequel l'unité de commande (8) reçoit une mesure de température depuis l'au moins un capteur de température (5, 9) à la fin de la durée de dépassement (D_{O}) et compare la mesure à la température prévue dérivée du point de fonctionnement suivant, dans lequel la durée de dépassement (D_{O}) est adaptée si la température mesurée est plus haute ou plus basse que prévu.

8. Procédé selon la revendication 7, dans lequel l'unité de commande (8) estime la durée de dépassement nécessaire (D_{E}) pour atteindre la température prévue dérivée du point de fonctionnement suivant et adapte la durée de dépassement en cours (D_{O}) en ajoutant une fraction de la différence entre la durée de dépassement nécessaire estimée (D_{E}) et la durée de dépassement en cours (D_{O}).

9. Procédé selon l'une quelconque des revendications 6 à 8, dans lequel le système (1) comprend au moins un capteur de température (9) disposé dans la même pièce (2) que l'échangeur de chaleur (3), dans lequel l'unité de commande (8) calcule un gradient de température à partir de mesures de température par le capteur de température ambiante (9) pendant chaque activation du mode dépassement.

10. Procédé selon la revendication 9, dans lequel la durée de dépassement nécessaire (D_{E}) est estimée à partir d'un gradient de température moyen calculé à partir d'au moins deux mesures de température fournies par le capteur de température (9) pendant chaque activation du mode dépassement.

11. Système de chauffage ou de refroidissement (1) comprenant :
- un échangeur de chaleur (3),
- une vanne (4) agencée pour commander l'écoulement d'un fluide de chauffage ou de refroidissement à travers l'échangeur de chaleur (3),
- au moins un capteur de température (5, 9) agencé pour mesurer une réponse en température à un changement dans le degré d'ouverture de la vanne (4),
- une unité de commande (8) agencée pour commander le degré d'ouverture de la vanne (4) ainsi que pour recevoir des mesures de température depuis l'au moins un capteur de température (5, 9), le système (1) étant structuré et agencé et l'unité de commande (8) configurée pour effectuer le procédé selon l'une quelconque des revendications précédentes.

12. Système selon la revendication 11, **caractérisé en ce que** le système (1) comprend un actionneur électronique agencé pour actionner la vanne (4).

13. Système selon la revendication 11 ou 12, dans lequel la vanne (4) comprend une vanne régulatrice de pression pour maintenir la chute de pression à travers la vanne (4) constante.

14. Système selon l'une quelconque des revendications 11 à 13, dans lequel un capteur de température supplémentaire est disposé à l'entrée de l'échangeur de chaleur (3) et/ou au niveau de la vanne (4) pour mesurer la température du fluide de chauffage ou de refroidissement entrant dans l'échangeur de chaleur (3).

15. Système selon l'une quelconque des revendications 11 à 14, le système comprenant au moins un capteur de température disposé à une sortie de l'échangeur de chaleur pour mesurer la température du fluide sortant de l'échangeur de chaleur.
